(19) Europäisches Patentamt / European Patent Office / Office européen des brevets

(11) **EP 3 896 622 A1**

(12) **EUROPEAN PATENT APPLICATION**

(43) Date of publication:
**20.10.2021 Bulletin 2021/42**

(51) Int Cl.:
***G06N 7/00*** (2006.01)

(21) Application number: **21153205.6**

(22) Date of filing: **25.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.04.2020 JP 2020071934**

(71) Applicant: **FUJITSU LIMITED**
**Kanagawa 211-8588 (JP)**

(72) Inventors:
• **Dote, Aki**
**Kanagawa, 211-8588 (JP)**
• **Tamura, Hirotaka**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **SAMPLING DEVICE, SAMPLING METHOD, AND SAMPLING PROGRAM**

(57)    A sampling method includes: executing a state update process; executing a repetition count calculation process; executing an exchange control process; and executing an output process, the state update process being configured to hold values of a plurality of state variable groups each including a plurality of state variables, the plurality of state variables being included in an evaluation function indicating energy of an Ising model, and generate a state transition by changing any of the plurality of state variables in each attempt on the basis of a temperature value, in which different values are respectively associated with the plurality of state variable groups, and an amount of change in the energy due to a change in any of the plurality of state variables, the output process being configured to output values of the plurality of state variables and an expected value at a predetermined interval.

FIG. 1

$$A_{swap} = \min\left[1, \frac{\alpha(x;\beta')\,\alpha(x';\beta)}{\alpha(x;\beta)\,\alpha(x';\beta')}\exp[(\beta'-\beta)(E(x')-E(x))]\right]$$

$$\frac{\alpha(x;\beta')\,\alpha(x';\beta)}{\alpha(x;\beta)\,\alpha(x';\beta')} \approx \frac{N_f(x;\beta')N_f(x';\beta)}{N_f(x;\beta)N_f(x';\beta')}$$

$E(x)$: ENERGY
$\alpha(x;\beta)$ : STATE TRANSITION OCCURRENCE PROBABILITY (ESCAPE PROBABILITY)
$N_f(x;\beta)$ : NUMBER OF ALLOWED TRANSITIONS
$\beta$ : INVERSE TEMPERATURE (1/T)

EP 3 896 622 A1

Printed by Jouve, 75001 PARIS (FR)

**Description**

FIELD

The embodiments discussed herein are related to a sampling device, a sampling method, and a sampling program.

BACKGROUND

There is an Ising device (also called a Boltzmann machine) that uses an Ising-type evaluation function (also called an energy function or the like) as a device that calculates a large-scale discrete optimization problem which Neumann computers are not good at.

In calculation with the Ising device, a problem to be calculated is replaced with the Ising model which is a model representing the spin behavior of a magnetic material. Then, a state where the value of the Ising-type evaluation function (corresponding to energy of the Ising model) is minimized is searched for with the Markov-chain Monte Carlo method. Hereinafter, the Markov-Chain Monte Carlo method is abbreviated as MCMC method. In the MCMC method, for example, a state transition is accepted with the acceptance probability of the state transition specified by the Metropolis method or the Gibbs method.

There is a replica exchange method (also known as a parallel tempering or an exchange Monte Carlo method) as a kind of MCMC method. In the replica exchange method, MCMC processes using multiple temperatures are performed independently of each other, energies obtained by the MCMC processes are compared for every given attempts, and the states for two temperatures are exchanged with an appropriate probability. According to the replica exchange, a possibility of being constrained by a local solution is suppressed, and the entire search space may be efficiently searched, as compared with simulated annealing in which the temperature gradually decreases.

Meanwhile, in the MCMC method, a probability distribution indicating the occupancy probability of each state in the equilibrium state is a target distribution (for example, Boltzmann distribution). Therefore, with the MCMC method at a fixed temperature or the replica exchange method in which states are exchanged between multiple temperatures, a sample according to a target distribution may be obtained by outputting, as a sample, a state obtained during repetition of state transition or a value based on the state. The generated sample is used for, for example, calculating an expected value in machine learning, etc.

However, in the MCMC method, the abovementioned acceptance probability is very small for state transitions when the temperature is low and state transitions where an amount of change in energy is positively increased, and the same state is repeated many times, resulting in that sampling efficiency is deteriorated.

In the past, a method has been proposed for generating a sample string that transitions to different states for each attempt, calculating the number of attempts in which the sample string remains at each state in a case where the MCMC method is applied, and weighting the sample according to the number of attempts, to thereby obtain a target distribution (see, for example, Non-Patent Document 1).

Further, there is commonly an optimization device that searches for a state in which energy is minimized at high speed by implementing a replica exchange method using a digital circuit (see, for example, Patent Document 1).

Examples of the related art include Japanese Laid-open Patent Publication No. 2019-71119, and Jeffrey S. Rosenthal et al., "Jump Markov Chains and Rejection-Free Metropolis Algorithms", [online], November 4, 2019, arXiv: 1910.13316v2 [math.ST], [search on March 16, 2020], Internet <https://arxiv.org/pdf/1910.13316.pdf>.

SUMMARY

[TECHNICAL PROBLEM]

However, in a case where the replica exchange method is applied in the method of changing the state for each attempt as described above, the probability distribution of the sample and the target distribution may deviate from each other. That is, for example, the resulting sample may not follow the target distribution.

According to an aspect of the embodiments, provided is a solution to suppress a deviation between a probability distribution of a sample and a target distribution.

[SOLUTION TO PROBLEM]

According to an aspect of the embodiments, provided is a sampling method implemented by a computer. In an example, the sampling method includes: executing a state update process configured to hold values of a plurality of state variable groups each including a plurality of state variables, the plurality of state variables being included in an evaluation function indicating energy of an Ising model, and generate a state transition by changing any of the plurality of state variables in each attempt on the basis of a temperature value, in which different values are respectively associated with the plurality of state variable groups, and an amount of change in the energy due to a change in any of the plurality of state variables; executing a repetition count calculation process configured to calculate, on the basis of the temperature value and the amount of change, an expected value of a number of repetitions until the state transition occurs in a case where the state transition is stochastically allowed in the each attempt, and count a number of the state transitions allowed in a first state variable group with which a first temperature value is associated and in a second state variable group with which a second temperature value is associated among the plurality of state variable groups, and a number of the state transitions allowed in the first state variable group and in the second state variable group in a case where the second temperature value is associated with the first state variable group and the first temperature value is associated with the second state variable group; executing an exchange control process configured to calculate, on the basis of a counting result counted by the repetition count calculation unit, a ratio of occurrence probabilities of the state transition before and after an exchange between the first temperature value and the second temperature value associated with the first state variable group and the second state variable group, and exchange the first temperature value and the second temperature value according to an exchange probability of replica exchange corrected using the ratio; and executing an output process configured to output values of the plurality of state variables and the expected value at a predetermined interval.

[ADVANTAGEOUS EFFECTS OF INVENTION]

According to an aspect of the embodiments, it is possible to suppress a deviation between a probability distribution of a sample and a target distribution.

BRIEF DESCRIPTION OF DRAWINGS

FIG. 1 is a diagram illustrating an example of a sampling device according to a first embodiment;
FIG. 2 is a diagram illustrating an example of a sampling device according to a second embodiment;
FIG. 3 is a diagram illustrating an example of a replica processing unit;
FIG. 4 is a diagram illustrating an example of a repetition count calculation unit;
FIG. 5 is a flowchart illustrating a flow of an example of the operation of the replica processing unit;
FIG. 6 is a flowchart illustrating a flow of an example of operation of a replica exchange controller; and
FIG. 7 is a block diagram illustrating a hardware example of an information processing device.

DESCRIPTION OF EMBODIMENTS

Hereinafter, modes for carrying out the embodiments will be described with reference to the drawings.
Note that the following example describes a sampling device that generates a sample according to the Boltzmann distribution. That is, for example, the example where the Boltzmann distribution is used as a target distribution will be described, but the applicable target distribution is not limited to the Boltzmann distribution.
In addition, it is supposed that a sample output by the sampling device is in a state represented by a state variable group having a value of 0 or 1, and energy in a given state is defined by the Ising type evaluation function expressed by the following Equation (1).

$$E(x) = - \sum_{<i,j>} W_{ij} x_i x_j - \sum_i b_i x_i \qquad (1)$$

The first term on the right side indicates a value obtained by summing up products of values (0 or 1) of two state variables and a weighting coefficient (indicating the strength of correlation between the two state variables) for all combinations of all state variables in the state variable group with neither an omission nor an overlap. $x_i$ is a state variable having identification information (hereinafter referred to as an index) of i, $x_j$ is a state variable with an index = j, and $W_{ij}$ is a weighting coefficient indicating the magnitude of correlation between the state variables with indexes of i and j.
The second term on the right side indicates the sum of the products of a bias coefficient and state variable for each index. $b_i$ indicates the bias coefficient for the state variable with index = i. The weighting coefficient and bias coefficient are each given according to the sampling target.

The Boltzmann distribution, which is the target distribution, may be expressed by the following Equation (2).

$$p(x;\beta) = \frac{\exp(-\beta E(x))}{\sum_y \exp(-\beta E(y))} \qquad (2)$$

In Equation (2), x indicates a certain state (represented by the value of the state variable group in Equation (1)), and $\beta$ indicates an inverse temperature (the reciprocal of temperature).

Further, an acceptance probability A($\Delta$E) defined by the Metropolis method or the Gibbs method expressed by, for example, the following Equation (3) may be used as the acceptance probability of a certain state transition.

$$A(\Delta E) = \begin{cases} \min[1, exp(-\beta \cdot \Delta E)] & Metropolis\ method \\ 1/[1 + \exp(\beta \cdot \Delta E)] & Gibbs\ method \end{cases} \qquad (3)$$

$\Delta$E represents an amount of change in energy associated with the state transition.

Note that, in the following, it is assumed that the value of one state variable changes (inverts from 0 to 1 or from 1 to 0) in one state transition, and the index that identifies each state transition is equal to the index of one state variable. However, the embodiment is not limited to the mode in which the index of the state transition and the index of the state transition that changes with the state transition match. For example, the embodiment does not exclude a mode that handles state transitions caused by multiple state variables changing at once.

The following cause is considered as a reason why the probability distribution indicating the occupancy probability of each state does not converge to the target distribution as described above in a case where the replica exchange method is applied in the method of changing the state (generating a state transition) for each attempt.

In the replica exchange method, MCMC processes using multiple temperatures are performed independently of each other, and the states for two temperatures are exchanged with an exchange probability based on energies obtained by the MCMC processes and temperatures used in the MCMC processes for every prescribed number of attempts. Hereinafter, each MCMC process is referred to as a replica. Note that the exchange of states and the exchange of temperatures between replicas mean the same.

The exchange probability ($A_{swap1}$) may be expressed by the following Equation (4) using the above Equation (2).

$$A_{swap1} = \min\left[1, \frac{p(x;\beta')p(x';\beta)}{p(x;\beta)p(x';\beta')}\right]$$
$$= \min\left[1, \exp[(\beta' - \beta)(E(x') - E(x))]\right] \qquad (4)$$

In Equation (4), $\beta$ and $\beta$' represent the reciprocals of the two temperatures used in two replicas, and x and x' represent two states obtained in a given number of attempts for each replica. E(x) and E(x') represent energies in the respective states x and x'. The MIN function is used so that the exchange probability does not exceed 1.

Note that, in order to ensure that the exchange probability is not too small, replicas in which set temperatures are close to each other (for example, adjacent temperatures are set) are selected as the two replicas that are candidates for replica exchange.

In such a replica exchange method, the exchange probability is determined by the temperature difference and the energy difference between the respective states as described above.

On the other hand, in the method of changing a state for each attempt, an expected value of the number of attempts (the number of repetitions until the state transition occurs) in which each state remains in the current state in a case where the MCMC method is applied is calculated, and the sample is weighted by the expected value.

The characteristics of the number of repetitions as described above vary between temperatures. For example, when a state exists in a local solution with a flat bottom, a state transition with no energy change occurs with a high probability regardless of whether the temperature is high or low and, thus, the number of repetitions is small. On the other hand, when a state exists in a local solution having a non-flat bottom, the probability of occurrence of state transition is low at low temperature and, thus, the number of repetitions is increased, whereas the state transition is more likely to occur at high temperature than at low temperature and, thus, the number of repetitions is reduced.

Therefore, a rate of change of the number of repetitions when different temperatures are applied by replica exchange may greatly vary between, for example, the case where a state exists in the local solution with a flat bottom and the case where a state exists in the local solution with a non-flat bottom. This is considered to be the reason why the probability distribution does not converge to the target distribution.

In view of this, it has been proposed to correct the exchange probability represented by Equation (4) to an exchange probability represented by Equation (5) below (see, for example, Non-Patent Document 1).

$$A_{\mathrm{swap}} = \min\left[1, \frac{\alpha(\mathrm{x}; \beta')\alpha(\mathrm{x}'; \beta)}{\alpha(\mathrm{x}; \beta)\alpha(\mathrm{x}'; \beta')}\exp[(\beta' - \beta)(\mathrm{E}(\mathrm{x}') - \mathrm{E}(\mathrm{x}))]\right] \qquad (5)$$

In Equation (5), a(x;β) is an escape probability of leaving the state x (probability of occurrence of state transition in state x) when the inverse temperature is β, and may be expressed by the following Equation (6).

$$\alpha(x; \beta) = \frac{\sum_{i=1}^{N} A_i(x; \beta)}{N} \qquad (6)$$

The denominator in Equation (6) is N, which is the number of all state variables, and the numerator is the summation of the acceptance probabilities (which may be expressed by Equation (3)) of changes in each state variable.

a(x;β') in Equation (5) is the escape probability of leaving the state x when the inverse temperature is β', a(x';β) is the escape probability of leaving the state x' when the inverse temperature is β, and a(x';β') is the escape probability of leaving the state x' when the inverse temperature is β'. Each of these escape probabilities may be expressed in the same manner as in Equation (6).

a(x;β')a(x';β)/a(x;β)a(x';β') represents a ratio of escape probabilities when β set in the replica from which the state x is obtained is changed to β', and β' set in the replica from which the state x' is obtained is changed to β.

For example, when β < β' and the state x exists in a local solution having a non-flat bottom as in the above example, the higher the temperature (the lower the inverse temperature), the higher the escape probability. Therefore, a(x;β') < a(x;β) is established. On the other hand, when the state x' exists in a local solution with a flat bottom as in the above example, the escape probabilities are almost equal even after the temperature change.

Therefore, in such a case, a(x;β')a(x';β)/a(x;β)a(x';β') is 1 or less, and $A_{\mathrm{swap}}$ is smaller than $A_{\mathrm{swap1}}$, whereby the occurrence of exchange is suppressed.

Due to suppression of the possibility of exchange in which the rate of change of the number of repetitions greatly varies when different temperatures are applied as described above, improvement in convergence to the target distribution may be expected.

However, a lot of calculations are needed to calculate a(x;β')a(x';β)/a(x;β)a(x';β') because, for example, the summation of the acceptance probabilities of a change in each state variable is calculated as represented by Equation (6).

The sampling device according to the first embodiment described below takes this point into consideration and enables generation of samples according to the target distribution.

[First Embodiment]

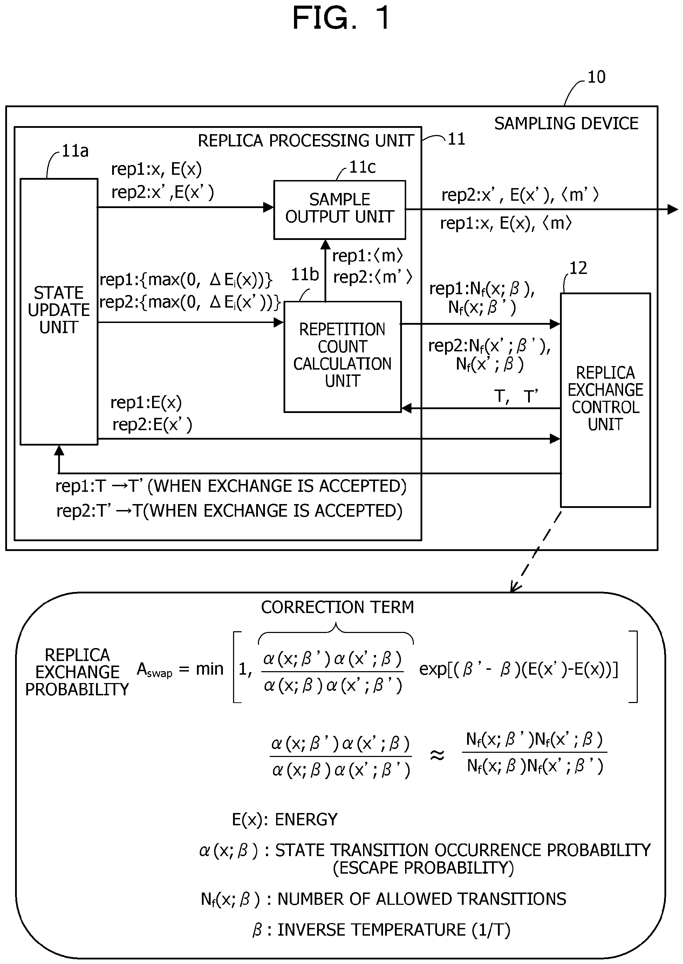

FIG. 1 is a diagram illustrating an example of a sampling device according to the first embodiment.

The sampling device 10 according to the first embodiment includes a replica processing unit 11 and a replica exchange control unit 12.

The replica processing unit 11 executes MCMC process of changing a state for each attempt. A plurality of replica processing units 11 may be provided so as to perform respectively, in parallel, a plurality of MCMC processes (plurality of replicas) in which different temperatures are set. However, the first embodiment describes an example where a plurality of replica processes is performed with time-division processing or pipeline processing.

The replica processing unit 11 has a state update unit 11a, a repetition count calculation unit 11b, and a sample output unit 11c.

The state update unit 11a holds values of a plurality of state variable groups each including a plurality of state variables included in the evaluation function as represented by Equation (1). The value of each state variable group corresponds to the state of each replica described above.

The state update unit 11a changes the value of any one of the plurality of state variables in each attempt on the basis of a temperature value (temperature or inverse temperature) in which different values are respectively associated with the plurality of state variable groups, and an amount of change in energy associated with a change in the value of any one of the plurality of state variables. That is, for example, the state update unit 11a performs processing according to the abovementioned method of generating a state transition for each attempt.

For example, the state update unit 11a calculates, for each of the plurality of state variables, an amount of change in energy due to a change in one of the plurality of state variables in a replica rep1. Then, the state update unit 11a calculates $\max(0, \Delta E_i(x))$ (i = 1 to N) for each state variable. That is, for example, $\max(0, \Delta E_i(x)) = 0$ when the amount of change in energy ($\Delta E_i(x)$) is negative, and $\max(0, \Delta E_i(x)) = \Delta E_i(x)$ when $\Delta E_i(x)$ is positive. Then, the state update unit 11a adds an independent random number value corresponding to the temperature value to $\max(0, \Delta E_i(x))$ for each state variable. The state update unit 11a is to update the state variable that provides a minimum addition result when the value changes. Thus, a state transition occurs in each attempt.

Note that the state update unit 11a calculates the energy for each replica on the basis of, for example, the state of each replica or the amount of change in energy when the value of the state variable to be updated is changed.

The repetition count calculation unit 11b calculates, on the basis of the temperature value and the amount of change in energy, an expected value of the number of repetitions until the state transition occurs when the state transition is stochastically allowed in each attempt. In the replica rep1, when the inverse temperature is $\beta$, the expected value <m> of the number of repetitions until the transition from the state x may be expressed by the reciprocal of $a(x;\beta)$ in Equation (6). $a(x;\beta)$ in Equation (6) may be approximated as expressed in the following Equation (7) using $E_{off}(x) = \min[\max(0, \Delta E_i(x))]$ as an offset value for setting the maximum value of the acceptance probability of each state transition to 1.

$$\alpha(x;\beta) = \frac{1}{N}\exp[-\beta E_{off}(x)]\sum_{i=1}^{N}\exp[-\beta(\Delta E_i(x) - E_{off}(x))]$$

$$\approx \frac{1}{N}\exp[-\beta E_{off}(x)]N_f(x;\beta) \qquad (7)$$

In Equation (7), $N_f(x;\beta)$ is, when state transitions are stochastically allowed as described above, the number of allowed state transitions (the number of state variables allowed to change) (in FIG. 1, it is expressed as the "number of allowed transitions") in a certain attempt.

The repetition count calculation unit 11b calculates the expected value <m> of the number of repetitions, which is the reciprocal of Equation (7), for example, as follows.

First, the repetition count calculation unit 11b acquires a set $\{\max(0, \Delta E_i(x))\}$ of $\max(0, \Delta E_i(x))$ for each state variable from the state update unit 11a. Then, the repetition count calculation unit 11b calculates the minimum value, among the set, that is the abovementioned $E_{off}(x) = \min[\max(0, \Delta E_i(x))]$,.

Furthermore, the repetition count calculation unit 11b determines whether or not the addition result obtained by adding a negative random number value the possible range of which varies depending on the temperature value to the value obtained by subtracting $E_{off}(x)$ from each $\max(0, \Delta E_i(x))$ is not more than 0. The determination result that the addition result is 0 or less indicates that the state transition that provides the addition result is allowed, and the determination result that the addition result is greater than 0 indicates that the state transition that provides the addition result is not allowed. Then, the repetition count calculation unit 11b obtains the above $N_f(x;\beta)$ by counting the number of allowed state transitions.

Further, the repetition count calculation unit 11b similarly calculates the number of state transitions allowed in the state x when the temperature value associated with the state x' of another replica that is an exchange destination candidate for a certain replica is associated with the state x. For example, the repetition count calculation unit 11b counts the number of state transitions allowed in the state x' of a replica rep2 in which $\beta'$, which is the adjacent temperature, is associated with $\beta$ as an exchange destination candidate, thereby obtaining $N_f(x;\beta')$.

The repetition count calculation unit 11b performs the above processing for each replica with, for example, time-division processing or pipeline processing. For example, the same processing is performed for the replica rep2, and an expected value <m'> of the number of repetitions, $N_f(x';\beta')$, and $N_f(x';\beta)$ are obtained.

The sample output unit 11c acquires the state and energy of each replica from the state update unit 11a at predetermined intervals (sampling intervals), acquires the expected value of the number of repetitions from the repetition count calculation unit 11b, and outputs the acquired values.

In the example of FIG. 1, the sample output unit 11c outputs the state x, the energy E(x), and the expected value <m> of the number of repetitions for the replica rep1, and the state x', the energy E(x'), and the expected value <m'> of the number of repetitions for the replica rep2.

The replica exchange control unit 12 calculates, on the basis of the counting result counted by the repetition count calculation unit 11b, a ratio of probabilities of occurrence of state transition (abovementioned escape probability) when the temperature values associated with the respective state variable groups of two replicas are exchanged. Further, the replica exchange control unit 12 acquires the energies E(x) and E(x') calculated by the state update unit 11a. Then, the replica exchange control unit 12 exchanges the temperature values associated with the respective state variable groups according to an exchange probability obtained by correcting the exchange probability represented by Equation (4) using the above ratio.

As described above, the exchange probability obtained by correcting the exchange probability represented by Equation (4) may be expressed by Equation (5). In Equation (5), a(x;β')a(x';β)/a(x;β)a(x';β') which is the ratio of escape probabilities may be approximated as expressed in Equation (8) below using Equation (7).

$$\frac{\alpha(x; \beta')\alpha(x'; \beta)}{\alpha(x; \beta)\alpha(x'; \beta')} \approx \frac{N_{\mathrm{f}}(x; \beta')N_{\mathrm{f}}(x'; \beta)}{N_{\mathrm{f}}(x; \beta)N_{\mathrm{f}}(x'; \beta')} \qquad (8)$$

As can be seen from Equation (8), the ratio of escape probabilities may be approximated using the counting result $N_f(x;\beta)$, $N_f(x;\beta')$, $N_f(x';\beta')$, and $N_f(x';\beta)$ counted by the repetition count calculation unit 11b. Thus, the correction of the exchange probability represented by Equation (4) is enabled using $N_f(x;\beta')N_f(x';\beta)/N_f(x;\beta)N_f(x';\beta')$ expressed by Equation (8) as a correction term.

The replica exchange control unit 12 exchanges temperature values in the replicas rep1 and rep2 according to the above exchange probability, for example. When the exchange is accepted, a temperature T' (inverse temperature β') is associated with the state variable group of the replica rep1 as the temperature value instead of a temperature T (inverse temperature β). On the other hand, the temperature T (inverse temperature β) is associated with the state variable group of the replica rep2 instead of the temperature T' (inverse temperature β') as the temperature value.

Note that, in replica exchange, exchanging temperature values between two replicas is the same as exchanging values (states) of state variable groups.

The replica processing unit 11 and the replica exchange control unit 12 described above may be achieved by, for example, an electronic circuit such as an application specific integrated circuit (ASIC) or a field programmable gate array (FPGA). Alternatively, the replica processing unit 11 and the replica exchange control unit 12 may be achieved by a processor such as a central processing unit (CPU) or a graphics processing unit (GPU) executing a program.

As described above, in the sampling device 10 according to the first embodiment, the replica exchange method is applied in a method of changing a state for each attempt. In a case where a sampling target is modeled so that low-energy state spaces are separated, as in the lattice Ising model, it takes time for the probability distribution of the sample to converge to the target distribution only by simply changing the state for each attempt. On the other hand, by further applying the replica exchange method, it is possible to suppress the state from being constrained by the local solution and to efficiently search the entire search space. However, when the exchange probability as represented by Equation (4) is used, the sample may not follow the target distribution for the abovementioned reasons.

The sampling device 10 according to the first embodiment calculates the ratio of the escape probabilities before and after the exchange using the counting result of the number of state transitions allowed when the state transitions are stochastically allowed in each attempt, and executes an exchange with the exchange probability obtained by correcting the exchange probability of Equation (4) using the ratio as the correction term.

As a result, adverse effects caused in a case where the abovementioned replica exchange method is applied are reduced, and the deviation of the probability distribution of the sample from the target distribution may be suppressed. That is, for example, a sample according to the target distribution may be generated.

Further, in the sampling device 10 according to the first embodiment, the ratio of the escape probabilities before and after the exchange is not calculated using a(x;β) or the like as in Equation (5), but calculated using the abovementioned counting result, whereby the calculation amount is reduced. Therefore, the calculation time may be shortened, and when the sampling device 10 is achieved by an electronic circuit such as an ASIC or FPGA, an increase in the circuit area may be suppressed.

Note that an expected value <f(x)> of a desired function f(x) may be estimated by, for example, the following Equation (9) using the sample obtained by the sampling device 10 and the expected value of the number of repetitions.

$$\langle f(x) \rangle = \sum_{i=1}^{n} \langle m^{(i)} \rangle f(x^{(i)}) / \sum_{i=1}^{n} \langle m^{(i)} \rangle \qquad (9)$$

In Equation (9), $<m^{(i)}>$ is the expected value of the number of repetitions obtained in the ith (i = 1 to n) sampling in a certain replica, and $x^{(i)}$ is the sample (value of the state variable group) obtained by the ith sampling in that replica.

The sampling device 10 may calculate the expected value <f(x)> described above.

Furthermore, the sampling device 10 may also function as an optimization device for calculating an optimization problem. In that case, the weighting coefficient and bias coefficient represented in Equation (1) are set according to constraint conditions or the like of the optimization problem. Then, for example, among the states corresponding to the energy in each replica output by the sample output unit 11c, the state corresponding to the minimum energy in the predetermined number of attempts is output as the solution of the optimization problem.

[Second Embodiment]

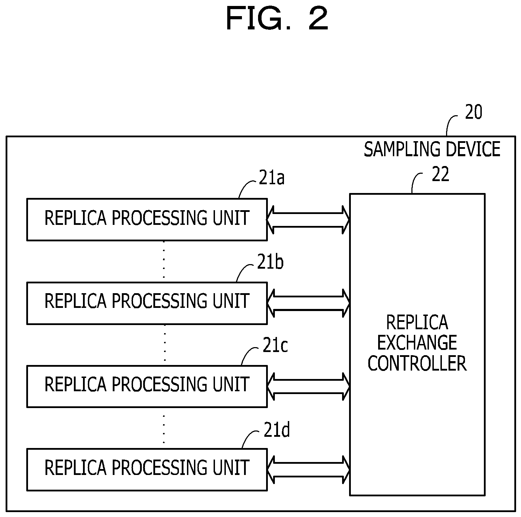

FIG. 2 is a diagram illustrating an example of a sampling device according to the second embodiment.
A sampling device 20 according to the second embodiment has a plurality of replica processing units (for example, replica processing units 21a, 21b, 21c, 21d) and a replica exchange controller 22.
In the sampling device 20 according to the second embodiment, each of the plurality of replica processing units includes the state update unit 11a, the repetition count calculation unit 11b, and the sample output unit 11c illustrated in FIG. 1.
Each of the plurality of replica processing units performs a process similar to the process of the replica processing unit 11 illustrated in FIG. 1 for any of the plurality of state variable groups, and the processes are executed in parallel among the plurality of replica processing units. Note that, similar to the replica processing unit 11, each of the plurality of replica processing units may perform the process on the plurality of state variable groups with the time-division processing or pipeline processing.
The replica exchange controller 22 has the same function as the replica exchange control unit 12 of the first embodiment.

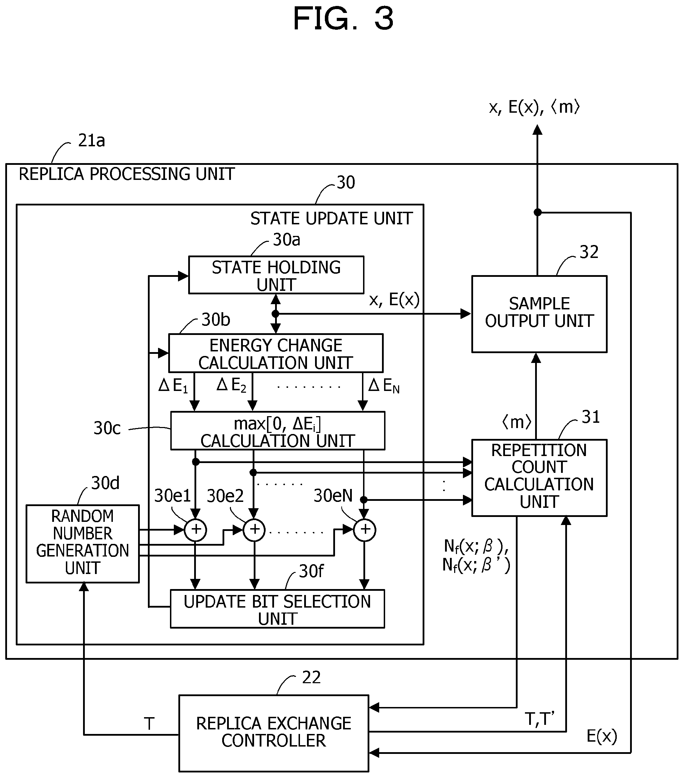

FIG. 3 is a diagram illustrating an example of the replica processing unit. Although FIG. 3 illustrates an example of the replica processing unit 21a, other replica processing units may be achieved by the same configuration.
The replica processing unit 21a has a state update unit 30, a repetition count calculation unit 31, and a sample output unit 32.
The state update unit 30 includes a state holding unit 30a, an energy change calculation unit 30b, a max[0, $\Delta E_i$] calculation unit 30c, a random number generation unit 30d, adders 30e1, 30e2..., 30eN, and an update bit selection unit 30f.
The state holding unit 30a holds a value of a state variable group of a replica processed by the state holding unit 30a, that is, values of N state variables ($x_1$ to $x_N$) included in the evaluation function represented by Equation (1), and an energy value. Further, the state holding unit 30a also has a function of changing the value of the state variable on the basis of the index indicating an update bit (state variable to be updated) output by the update bit selection unit 30f. Further, the state holding unit 30a also has a function of acquiring an amount of change in energy (any of $\Delta E_1$ to $\Delta E_N$) corresponding to the index of the update bit from the energy change calculation unit 30b and updating the energy.
The energy change calculation unit 30b calculates an amount of change in energy of the Ising model accompanying the state transition for each of a plurality of state transitions that may possibly occur in a certain state variable group. Assuming that the value of one state variable changes in one state transition, the energy change calculation unit 30b calculates, for each of $x_1$ to $x_N$, amounts of change in energy ($\Delta E_1$, $\Delta E_2$..., $\Delta E_N$) when one of $x_1$ to $x_N$ changes.
$\Delta E_i$, which is the amount of change in energy due to the change in the value of $x_i$, may be expressed by the following Equation (10).

$$\Delta E_i = -\Delta x_i \left( \sum_j W_{ij} x_j + b_i \right) = -\Delta x_i h_i \qquad (10)$$

In Equation (10), when $x_i$ changes from 1 to 0, $\Delta x_i$ becomes -1, and when $x_i$ changes from 0 to 1, $\Delta x_i$ becomes 1. Note that $h_i$ is called a local field, and $\Delta E_i$ is obtained by multiplying $h_i$ by a sign (+1 or -1) according to $\Delta x_i$.
$h_i$ is updated on the basis the index indicated by the update bit. For example, if the index of the update bit is j, $h_i$ is updated to $h_i + W_{ij} \cdot \Delta x_j$. $W_{ij}$ is stored in a storage unit (not illustrated).
The max[0, $\Delta E_i$] calculation unit 30c calculates max[0, $\Delta E_i$] for each of $\Delta E_1$ to $\Delta E_N$. That is, for example, the max[0, $\Delta E_i$] calculation unit 30c outputs N update values obtained by keeping the values of those having a value of 0 or more, among $\Delta E_1$ to $\Delta E_N$, and updating those having a negative value to 0.
The random number generation unit 30d generates N random number values on the basis of a temperature value supplied from the replica exchange controller 22.
The random number generation unit 30d generates N $r_i$, which are uniform random numbers of $0 < r_i < 1$, by using, for example, a Mersenne Twister, and generates log(-log$r_i$) by using a conversion table or the like. Note that $r_i$ is updated every clock cycle, for example. Then, the random number generation unit 30d generates N random number values by calculating T × log(-logn) using, for example, the temperature T which is the supplied temperature value.

The adders 30e1 to 30eN calculate N addition results by adding any of N random number values to each of the N update values output by the max[0, $\Delta E_i$] calculation unit 30c.

The update bit selection unit 30f detects the minimum addition result among the N addition results output by the adders 30e1 to 30eN. Then, the update bit selection unit 30f outputs, as the index of the update bit, the index of the state variable that provides the minimum addition result when the value changes. As a result, a state transition that provides the addition result occurs.

Due to the state update unit 30 described above, a state transition occurs in each attempt.

The repetition count calculation unit 31 calculates the expected value <m> of the number of repetitions until the state transition occurs when the state transition is stochastically allowed in each attempt. Further, the repetition count calculation unit 31 counts the number of state variables that are allowed to change in the state x of the replica processed by the replica processing unit 21a, and outputs $N_f(x;\beta)$ which is the count value.

Further, the repetition count calculation unit 31 similarly counts the number of state variables that are allowed to change in the state x when the temperature value associated with a state x' of another replica is associated with the state x, and outputs $N_f(x;\beta')$ which is the counting result.

The sample output unit 32 acquires, from the state holding unit 30a, the state x and energy E(x) of the replica processed by the replica processing unit 21a at each predetermined interval (sampling interval), acquires the expected value <m> of the number of repetitions from the repetition count calculation unit 31, and outputs the acquired values.

Meanwhile, in the method of generating a state transition in each attempt, a state a in one attempt transitions to a different state b in the next attempt, but there is a high probability that the state b returns to the state a in the next attempt. That is, the change in states may be, for example, {a, b, a, c, a, b, a, d...} (a, b, c, d represent states), or the like. In this case, if sampling is performed only with an even number of attempts, the sample may converge to a biased distribution such as {a, a, a...} or {b, c, b, d...}.

In order to avoid this situation, the sample output unit 32 may change the sampling interval for each sampling. For example, the sample output unit 32 may switch the sampling interval between an even number of attempts and an odd number of attempts for each sampling, or may employ a random number of attempts.

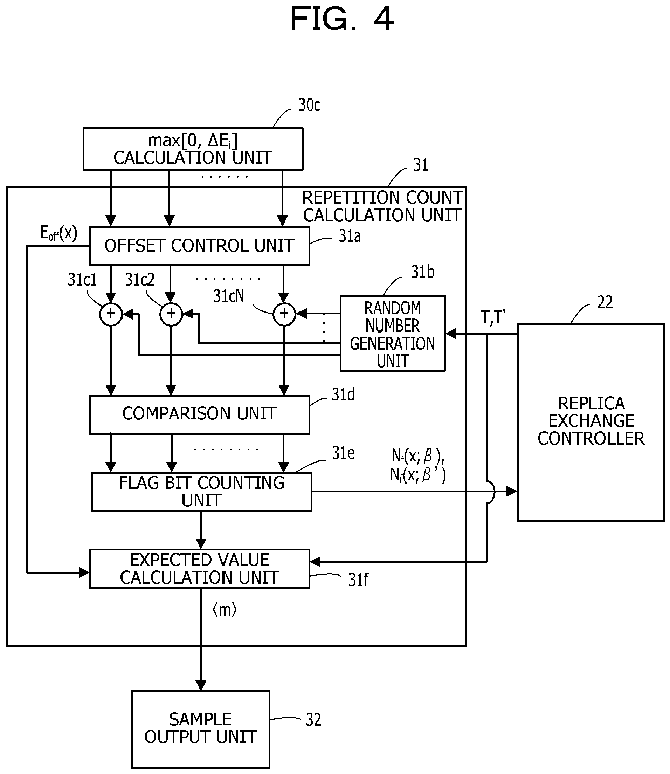

FIG. 4 is a diagram illustrating an example of the repetition count calculation unit.

The repetition count calculation unit 31 includes an offset control unit 31a, a random number generation unit 31b, adders 31c1, 31c2..., 31cN, a comparison unit 31d, a flag bit counting unit 31e, and an expected value calculation unit 31f.

The offset control unit 31a acquires multiple update values that are the outputs of the max[0, $\Delta E_i$] calculation unit 30c. Then, the offset control unit 31a calculates the minimum value, that is, $E_{off}(x) = \min[\max(0,\Delta E_i(x))]$. Further, the offset control unit 31a outputs a plurality of update values obtained by subtracting $E_{off}(x)$ from each $\max(0,\Delta E_i(x))$.

Similar to the random number generation unit 30d of the state update unit 30, the random number generation unit 31b generates N random number values on the basis of a temperature value supplied from the replica exchange controller 22.

For example, the random number generation unit 31b generates N random number values by calculating T × $\log r_i$ (i = 1 to N) using a temperature T which is the temperature value supplied from the replica exchange controller 22. Further, when the replica exchange controller 22 supplies a temperature T' that is the temperature value associated with the state x' of another replica, the random number generation unit 31b calculates T' × $\log r_i$ (i = 1 to N).

The adders 31c1 to 31cN output N addition results obtained by adding any of N random number values to each of the N update values output by the offset control unit 31a.

The comparison unit 31d compares each of the N addition results with a threshold value (hereinafter, set to 0), and outputs, for each of the N addition results, N flag bits having a value of 1 when the addition result is 0 or less, and having a value of 0 when the addition result is greater than 0. The determination result (flag bit = 1) that the addition result is 0 or less indicates that the change of the state variable that provides the addition result is allowed. The determination result (flag bit = 0) that the addition result is greater than 0 indicates that the change of the state variable that provides the addition result is not allowed.

The flag bit counting unit 31e outputs a count value obtained by counting the number of flag bits having a value of 1 out of N flag bits. The flag bit counting unit 31e outputs $N_f(x;\beta)$ as the counting value when the temperature T is supplied to the repetition count calculation unit 31 from the replica exchange controller 22 as the temperature value, and outputs $N_f(x;\beta')$ as the counting value when the temperature T' is supplied.

The expected value calculation unit 31f calculates an expected value <m>, which is the reciprocal of Equation (7), on the basis of the $E_{off}(x)$ calculated by the offset control unit 31a, the $N_f(x;\beta)$ output by the flag bit counting unit 31e, and the temperature T supplied from the replica exchange controller 22. In Equation (7), $\beta = 1/T$.

Note that, although the replica processing unit 21a further includes a control unit that controls operation timings of the state update unit 30, the repetition count calculation unit 31, and the sample output unit 32, and a communication unit that transmits and receives information to and from the replica exchange controller 22 and the like, they are not illustrated in the drawings.

The replica processing unit 21a and the replica exchange controller 22 described above may be achieved by, for example, an electronic circuit such as an ASIC or an FPGA. Alternatively, the replica processing unit 21a and the replica exchange controller 22 may be achieved by a processor such as a CPU or a GPU executing a program.

An operation example of the sampling device according to the second embodiment will be described below.

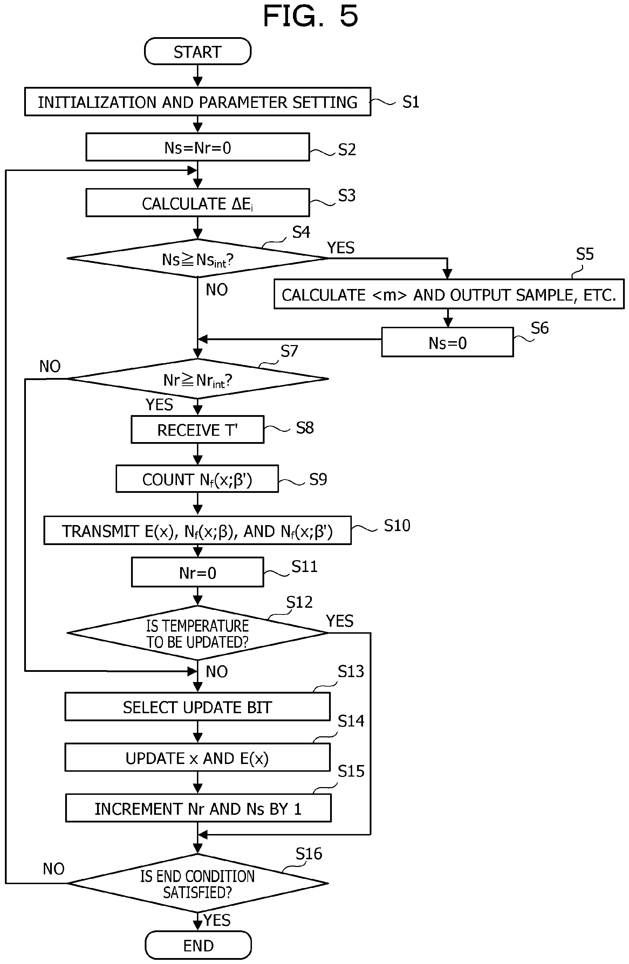

FIG. 5 is a flowchart illustrating a flow of an example of the operation of a certain replica processing unit. Note that, although the operation example of the replica processing unit 21a illustrated in FIG. 3 is described below, the same processing is performed by the other replica processing units.

First, initialization and parameter setting are performed (step S1). In the process of step S1, for example, initial values of the state variables ($x_1$ to $x_N$) are set, an initial value of the energy E(x) based on the set initial values of the state variables, the weighting coefficient, and the bias coefficient is calculated, and an initial value of the local field ($h_i$) is calculated. These processes may be performed, for example, under the control of the replica exchange controller 22, or may be performed by the control unit (not illustrated) in the replica processing unit 21a. Further, the replica processing unit 21a may acquire these initial values calculated by an apparatus outside of the sampling device 20.

The initial value of each state variable and the initial value of energy E(x) are held in the state holding unit 30a. Further, in the process of step S1, the temperature T is set by the replica exchange controller 22, and parameters such as $Ns_{int}$ indicating the sampling interval and $Nr_{int}$ indicating the replica exchange interval are set.

Further, a counter (not illustrated) of the state update unit 30 sets two types of counter values (Ns, Nr) to 0 (step S2).

Then, the energy change calculation unit 30b calculates $\Delta E_i$ based on Equation (10) (step S3).

The state update unit 30 determines whether or not $Ns \geq Ns_{int}$ is established (step S4), and when it determines that $Ns \geq Ns_{int}$ is established, the process of step S5 is performed.

In the process of step S5, the repetition count calculation unit 31 calculates the expected value <m> of the number of repetitions on the basis of the output of the $max[0, \Delta E_i]$ calculation unit 30c and the temperature T (= $1/\beta$). Note that the $N_f(x;\beta)$ obtained during the calculation of the expected value <m> is stored in a storage unit such as a register in the repetition count calculation unit 31, for example.

Further, in the process of step S5, the sample output unit 32 acquires the state x of the replica processed by the replica processing unit 21a from the state holding unit 30a and outputs the acquired state x as a sample. Further, the sample output unit 32 acquires the energy E(x) from the state holding unit 30a, acquires the expected value <m> of the number of repetitions from the repetition count calculation unit 31, and outputs them as well.

Further, the state update unit 30 resets Ns to 0 (step S6). When determining that $Ns \geq Ns_{int}$ is not established, or after the process of step S6, the state update unit 30 performs the process of step S7.

Note that, during the process of step S5, the state update unit 30 may execute the processes of step S6 and subsequent steps without waiting for the end of the process in the repetition count calculation unit 31.

In the process of step S7, the state update unit 30 determines whether or not $Nr \geq Nr_{int}$ is established. When the state update unit 30 determines that $Nr \geq Nr_{int}$ is established, the communication unit (not illustrated) in the replica processing unit 21a notifies the replica exchange controller 22 of information indicating this situation. Then, the communication unit receives the temperature T' which is supplied from the replica processing unit 21a and which is an exchange candidate (step S8).

The repetition count calculation unit 31 counts $N_f(x;\beta')$ on the basis of the output of the $max[0, \Delta E_i]$ calculation unit 30c and T'= ($1/\beta'$) (step S9). Then, the communication unit (not illustrated) transmits the energy E(x), $N_f(x;\beta)$, and $N_f(x;\beta')$ output by the sample output unit 32 to the replica exchange controller 22 (step S10). Further, the state update unit 30 resets Nr to 0 (step S11).

After that, when the replica exchange controller 22 does not update the temperature T set in the replica processing unit 21a (step S12: NO), the update bit selection unit 30f of the state update unit 30 selects the update bit (step S13).

In the process of step S13, the update bit selection unit 30f selects the update bit by outputting the index of the update bit on the basis of the N addition results output by the adders 30e1 to 30eN.

The state holding unit 30a updates the state x (value of the state variable group) and the energy E(x) on the basis of the index of the update bit (step S14). Then, the state update unit 30 increments Nr and Ns by 1 (step S15).

After the process in step S15, or when the temperature T is updated to the temperature T' (step S12: YES), the control unit (not illustrated) of the replica processing unit 21a determines whether or not an end condition of the sampling processing is satisfied (step S16). For example, when the number of attempts reaches a predetermined maximum number of attempts, when the number of samplings reaches a predetermined maximum number of samplings, or when a sampling end instruction is given from the outside of the sampling device 20, the control unit determines that the end condition is satisfied.

If it is determined that the end condition is satisfied, the sampling processing in the replica processing unit 21a is completed, and if it is determined that the end condition is not satisfied, the processing from step S3 is repeated.

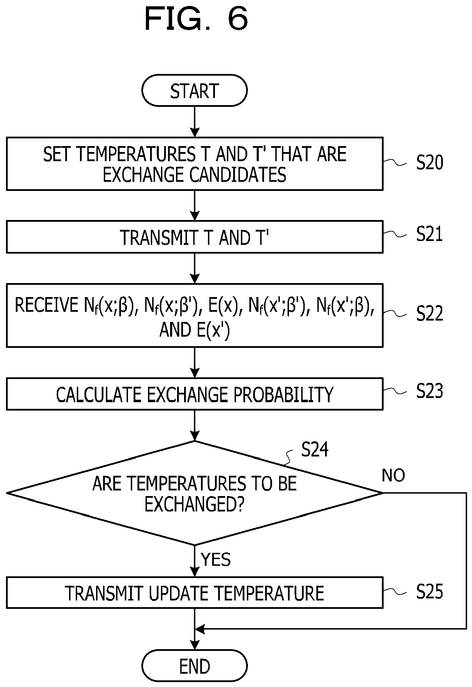

FIG. 6 is a flowchart illustrating a flow of an example of the operation of the replica exchange controller.

When receiving, for example, a notification indicating that $Nr \geq Nr_{int}$ is established from all the replica processing units included in the sampling device 20, the replica exchange controller 22 starts the following processing. Note that the replica exchange controller 22 may start the following processing at a predetermined interrupt timing by interrupt processing.

The replica exchange controller 22 sets the temperatures T and T' which are exchange candidates (step S20). To ensure that the exchange probability is not too small, replicas in which the set temperatures are close to each other (for example, adjacent temperatures are set) are selected as the two replicas to be exchanged. Then, the temperatures T and T' set in the two selected replicas are set as exchange candidates.

In the following, it is supposed that the temperature T is set in the replica processed by the replica processing unit 21a among the plurality of replica processing units illustrated in FIG. 2, and the temperature T' is set in the replica processed by the replica processing unit 21b.

The replica exchange controller 22 transmits the temperature T' to the replica processing unit 21a, and transmits the temperature T to the replica processing unit 21b (step S21).

Then, the replica exchange controller 22 receives the energy $E(x)$, $N_f(x;\beta)$, and $N_f(x;\beta')$ transmitted by the replica processing unit 21a by the processing as illustrated in FIG. 5. Further, the replica exchange controller 22 also receives energy $E(x')$, $N_f(x';\beta')$, and $N_f(x';\beta)$ from the replica processing unit 21b by the same processing (step S22).

Then, the replica exchange controller 22 calculates the exchange probability represented by Equation (5) using the ratio of the escape probabilities as represented in Equation (8) as the correction term (step S23). Then, the replica exchange controller 22 determines whether to exchange the temperatures set in the replica processing units 21a and 21b on the basis of the calculated exchange probability (step S24).

When it is determined that the temperatures are to be exchanged, the replica exchange controller 22 transmits the temperature T' to the replica processing unit 21a as the update temperature, and transmits the temperature T to the replica processing unit 21b as the update temperature (step S25). Note that the replica exchange controller 22 may instruct the replica processing units 21a and 21b to set the temperatures transmitted in step S21 as the update temperatures instead of transmitting the update temperatures.

When it is determined in the process of step S24 that the temperatures are not to be exchanged, or after the process of step S25, one replica exchange process for the replica processing units 21a and 21b ends.

The replica exchange controller 22 may perform the same processing as described above in parallel for a plurality of replica sets to be exchanged.

Note that the order of the respective processing step illustrated in FIGs. 5 and 6 is not limited to that in the above example, and may be changed as appropriate.

As described above, similar to the sampling device 10 according to the first embodiment, the sampling device 20 according to the second embodiment also corrects the exchange probability using the number of state transitions ($N_f(x;\beta)$ and $N_f(x;\beta')$ described above) allowed when state transitions are stochastically allowed. Therefore, the same effect as that of the sampling device 10 according to the first embodiment may be obtained.

Further, in the sampling device 20 according to the second embodiment, processes for a plurality of replicas using the plurality of replica processing units may be executed in parallel, whereby the sampling processing may be speeded up.

Note that the plurality of replica processing units and the replica exchange controller 22 may also be achieved by a processor such as a CPU or GPU executing a program. In that case, the sampling device 20 is achieved by, for example, an information processing device (computer) as described below.

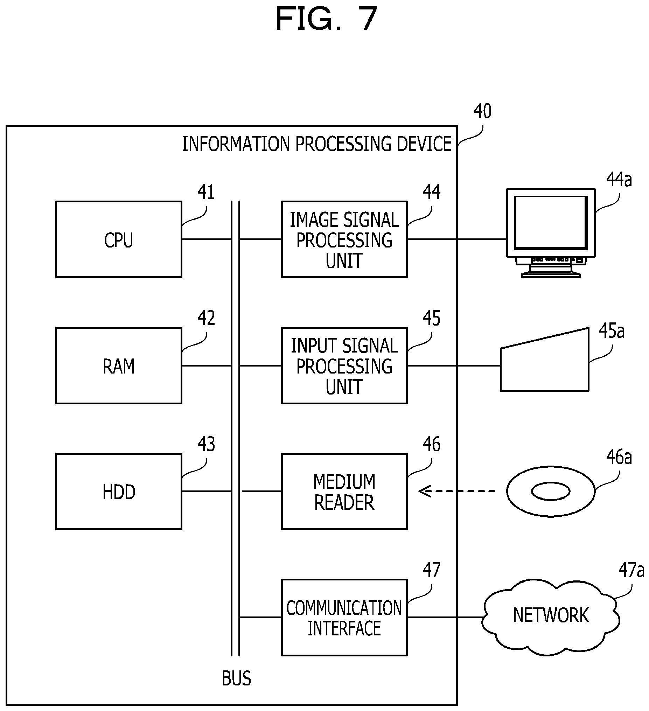

FIG. 7 is a block diagram illustrating a hardware example of an information processing device.

An information processing device 40 includes a CPU 41, a random access memory (RAM) 42, a hard disk drive (HDD) 43, an image signal processing unit 44, an input signal processing unit 45, a medium reader 46, and a communication interface 47. The above units are connected to a bus.

The CPU 41 is a processor including an arithmetic circuit that executes a command in the program. The CPU 41 loads at least a part of the program and data stored in the HDD 43 into the RAM 42, and executes the program. Note that the CPU 41 may include a plurality of processor cores, the information processing device 40 may include a plurality of processors, and processes described below may be executed in parallel using the plurality of processors or processor cores. Further, a set of a plurality of processors (multiprocessor) may be referred to as a "processor".

The RAM 42 is a volatile semiconductor memory that temporarily stores a program executed by the CPU 41 and data used by the CPU 41 for calculation. Note that the information processing device 40 may include a memory of a type different from RAM, or a plurality of memories.

The HDD 43 is a non-volatile storage device that stores software programs such as an operating system (OS), middleware, and application software, and data. The program includes, for example, a sampling program that causes the information processing device 40 to execute the sampling processing as described above. The HDD 43 stores, for example, the weighting coefficient, the bias coefficient included in Equation (1) described above, or the like as data. Note that the information processing device 40 may include other types of storage devices such as a flash memory and a solid state drive (SSD), and may include a plurality of non-volatile storage devices.

The image signal processing unit 44 outputs an image to a display 44a connected to the information processing device 40 in accordance with a command from the CPU 41. Examples of a display usable as the display 44a include a cathode ray tube (CRT) display, a liquid crystal display (LCD), a plasma display panel (PDP), an organic electro-luminescence (OEL) display, or the like.

The input signal processing unit 45 acquires an input signal from an input device 45a connected to the information processing device 40 and outputs the input signal to the CPU 41. Examples of a device usable as the input device 45a include a pointing device such as a mouse, a touch panel, a touch pad, or a trackball, a keyboard, a remote controller, a button switch, and the like. Further, a plurality of types of input devices may be connected to the information processing device 40.

The medium reader 46 is a reading device that reads programs and data recorded on the recording medium 46a. Examples of a device usable as the recording medium 46a include, for example, a magnetic disk, an optical disk, a magneto-optical disk (MO), a semiconductor memory, and the like. The magnetic disk includes a flexible disk (FD) and an HDD. The optical disc includes a compact disc (CD) and a digital versatile disc (DVD).

The medium reader 46 copies, for example, a program or data read from the recording medium 46a to another recording medium such as the RAM 42 or the HDD 43. The read program is executed by, for example, the CPU 41. Note that the recording medium 46a may be a portable recording medium and may be used for distribution of programs and data. Further, the recording medium 46a or the HDD 43 may be referred to as a computer-readable recording medium.

The communication interface 47 is an interface that is connected to a network 47a and communicates with other information processing devices via the network 47a. The communication interface 47 may be a wired communication interface connected to a communication device, such as a switch, by a cable or a wireless communication interface connected to a base station by a wireless link.

Note that the replica exchange controller 22 as illustrated in FIG. 2 may be achieved using the CPU 41 or the like, and a plurality of replica processing units may be achieved using a plurality of ASICs, GPUs, or the like.

The abovementioned sampling processing may be implemented by causing the information processing device 40 to execute a program.

The program may be recorded on a computer-readable recording medium (for example, the recording medium 46a). Examples of a device usable as the recording medium include, for example, a magnetic disk, an optical disk, a magneto-optical disk, a semiconductor memory, or the like. The magnetic disk includes an FD and an HDD. The optical disk includes a CD, a CD-R (recordable)/RW (rewritable), a DVD and a DVD-R/RW. The program may be recorded and distributed on a portable recording medium. In that case, the program may be copied from the portable recording medium to another recording medium (for example, the HDD 43) and executed.

While the sampling device, the sampling method, and the sampling program according to an aspect have been described above based on the embodiments, they are merely examples and are not limited to the above description.

[REFERENCE SIGNS LIST]

10 Sampling device
11 Replica processing unit
11a State update unit
11b Repetition count calculation unit
11c Sample output unit
12 Replica exchange control unit

[CITATION LIST]

Japanese Laid-open Patent Publication No. 2019-71119.
Jeffrey S. Rosenthal et al., "Jump Markov Chains and Rejection-Free Metropolis Algorithms", [online], November 4, 2019, arXiv: 1910.13316v2 [math.ST], [search on March 16, 2020], Internet <https://arxiv.org/pdf/1910.13316.pdf>.

**Claims**

1. A sampling device comprising:

a state update unit that holds values of a plurality of state variable groups each including a plurality of state variables, the plurality of state variables being included in an evaluation function indicating energy of an Ising model, and that generates a state transition by changing any of the plurality of state variables in each attempt on the basis of a temperature value, in which different values are respectively associated with the plurality of state variable groups, and an amount of change in the energy due to a change in any of the plurality of state variables;

a repetition count calculation unit that calculates, on the basis of the temperature value and the amount of change, an expected value of a number of repetitions until the state transition occurs in a case where the state transition is stochastically allowed in the each attempt, and that counts a number of the state transitions allowed in a first state variable group with which a first temperature value is associated and in a second state variable group with which a second temperature value is associated among the plurality of state variable groups, and a number of the state transitions allowed in the first state variable group and in the second state variable group in a case where the second temperature value is associated with the first state variable group and the first temperature value is associated with the second state variable group;

an exchange control unit that calculates, on the basis of a counting result counted by the repetition count calculation unit, a ratio of occurrence probabilities of the state transition before and after an exchange between the first temperature value and the second temperature value associated with the first state variable group and the second state variable group, and that exchanges the first temperature value and the second temperature value according to an exchange probability of replica exchange corrected using the ratio; and

an output unit that outputs values of the plurality of state variables and the expected value at a predetermined interval.

2. The sampling device according to claim 1, wherein the state update unit
calculates the amount of change for each of a plurality of state transitions that possibly occurs in the first state variable group,
calculates a plurality of first update values obtained by updating the amount of change having a negative value to 0 and keeping a value of the amount of change that is 0 or more,
calculates a plurality of first addition results by adding, to each of the plurality of first update values, any of a plurality of first random number values generated on the basis of the first temperature value, and
generates the state transition that provides a minimum first addition result among the plurality of first addition results.

3. The sampling device according to claim 2, wherein the repetition count calculation unit
calculates a plurality of second update values obtained by subtracting, from each of the plurality of first update values, an offset value that is a minimum value among the plurality of first update values;
calculates a plurality of second addition results by adding, to each of the plurality of second update values, any of a plurality of second random number values generated on the basis of the first temperature value;
determines the state transition, among the plurality of state transitions, that is allowed on the basis of a comparison result between a threshold value and each of the plurality of second addition results;
calculates a plurality of third addition results by adding, to each of the plurality of second update values, any of a plurality of third random number values generated on the basis of the second temperature value; and
determines the state transition, among the plurality of state transitions, that is allowed on the basis of a comparison result between the threshold value and each of the plurality of third addition results.

4. The sampling device according to any one of claims 1 to 3, wherein
the state update unit, the repetition count calculation unit, and the output unit are provided in each of a plurality of replica processing units,
each of the plurality of replica processing units performs, for any of the plurality of state variable groups, processes for generating the state transition in the each attempt, calculating the expected value, counting the number of the state transitions that are allowed, and outputting values of the plurality of state variables and the expected value at the predetermined interval, and
the processes are executed in parallel among the plurality of replica processing units.

5. A sampling method implemented by a computer, the method comprising:

executing a state update process configured to

hold values of a plurality of state variable groups each including a plurality of state variables, the plurality of state variables being included in an evaluation function indicating energy of an Ising model, and generate a state transition by changing any of the plurality of state variables in each attempt on the basis of a temperature value, in which different values are respectively associated with the plurality of state variable groups, and an amount of change in the energy due to a change in any of the plurality of state variables;

executing a repetition count calculation process configured to

calculate, on the basis of the temperature value and the amount of change, an expected value of a number of repetitions until the state transition occurs in a case where the state transition is stochastically allowed in the each attempt, and count a number of the state transitions allowed in a first state variable group with which a first temperature value is associated and in a second state variable group with which a second temperature value is associated among the plurality of state variable groups, and a number of the state transitions allowed in the first state variable group and in the second state variable group in a case where the second temperature value is associated with the first state variable group and the first temperature value is associated with the second state variable group;

executing an exchange control process configured to

calculate, on the basis of a counting result counted by the repetition count calculation unit, a ratio of occurrence probabilities of the state transition before and after an exchange between the first temperature value and the second temperature value associated with the first state variable group and the second state variable group, and exchange the first temperature value and the second temperature value according to an exchange probability of replica exchange corrected using the ratio; and

executing an output process configured to output values of the plurality of state variables and the expected value at a predetermined interval.

6. A sampling program comprising instructions which, when the program is executed by a computer, cause the computer to carry out processing, the processing comprising:

executing a state update process configured to

hold values of a plurality of state variable groups each including a plurality of state variables, the plurality of state variables being included in an evaluation function indicating energy of an Ising model, and generate a state transition by changing any of the plurality of state variables in each attempt on the basis of a temperature value, in which different values are respectively associated with the plurality of state variable groups, and an amount of change in the energy due to a change in any of the plurality of state variables;

executing a repetition count calculation process configured to

calculate, on the basis of the temperature value and the amount of change, an expected value of a number of repetitions until the state transition occurs in a case where the state transition is stochastically allowed in the each attempt, and count a number of the state transitions allowed in a first state variable group with which a first temperature value is associated and in a second state variable group with which a second temperature value is associated among the plurality of state variable groups, and a number of the state transitions allowed in the first state variable group and in the second state variable group in a case where the second temperature value is associated with the first state variable group and the first temperature value is associated with the second state variable group;

executing an exchange control process configured to

calculate, on the basis of a counting result counted by the repetition count calculation unit, a ratio of occurrence probabilities of the state transition before and after an exchange between the first temperature value and the second temperature value associated with the first state variable group and the second state variable group, and

exchange the first temperature value and the second temperature value according to an exchange probability of replica exchange corrected using the ratio; and

executing an output process configured to output values of the plurality of state variables and the expected value at a predetermined interval.

# FIG. 1

REPLICA EXCHANGE PROBABILITY

$$A_{swap} = \min\left[1, \frac{\alpha(x;\beta')\alpha(x';\beta)}{\alpha(x;\beta)\alpha(x';\beta')} \exp[(\beta'-\beta)(E(x')-E(x))]\right]$$

CORRECTION TERM

$$\frac{\alpha(x;\beta')\alpha(x';\beta)}{\alpha(x;\beta)\alpha(x';\beta')} \approx \frac{N_f(x;\beta')N_f(x';\beta)}{N_f(x;\beta)N_f(x';\beta')}$$

E(x): ENERGY

$\alpha(x;\beta)$ : STATE TRANSITION OCCURRENCE PROBABILITY
(ESCAPE PROBABILITY)

$N_f(x;\beta)$ : NUMBER OF ALLOWED TRANSITIONS

$\beta$ : INVERSE TEMPERATURE (1/T)

# FIG. 2

SAMPLING DEVICE 20

21a
REPLICA PROCESSING UNIT

21b
REPLICA PROCESSING UNIT

21c
REPLICA PROCESSING UNIT

21d
REPLICA PROCESSING UNIT

22
REPLICA EXCHANGE CONTROLLER

# FIG. 3

x, E(x), ⟨m⟩

## 21a
### REPLICA PROCESSING UNIT

#### 30
##### STATE UPDATE UNIT

###### 30a
STATE HOLDING UNIT

x, E(x)

###### 30b
ENERGY CHANGE CALCULATION UNIT

$\Delta E_1$ $\quad \Delta E_2$ $\quad \cdots\cdots\cdots \quad \Delta E_N$

###### 30c
$max[0, \Delta E_i]$ CALCULATION UNIT

###### 30d
RANDOM NUMBER GENERATION UNIT

30e1 $\quad$ 30e2 $\quad\quad\quad$ 30eN

$+$ $\quad$ $+$ $\cdots\cdots$ $+$

###### 30f
UPDATE BIT SELECTION UNIT

#### 32
SAMPLE OUTPUT UNIT

⟨m⟩

#### 31
REPETITION COUNT CALCULATION UNIT

$N_f(x; \beta)$,
$N_f(x; \beta')$

## 22
REPLICA EXCHANGE CONTROLLER

T

T,T'

E(x)

# FIG. 4

# FIG. 5

START

INITIALIZATION AND PARAMETER SETTING — S1

$N_s = N_r = 0$ — S2

CALCULATE $\Delta E_i$ — S3

$N_s \geqq N_{s\,int}$? — S4

YES → CALCULATE $<m>$ AND OUTPUT SAMPLE, ETC. — S5

$N_s = 0$ — S6

NO

$N_r \geqq N_{r\,int}$? — S7

NO

YES

RECEIVE T' — S8

COUNT $N_f(x;\beta')$ — S9

TRANSMIT $E(x)$, $N_f(x;\beta)$, AND $N_f(x;\beta')$ — S10

$N_r = 0$ — S11

IS TEMPERATURE TO BE UPDATED? — S12

YES

NO

SELECT UPDATE BIT — S13

UPDATE x AND $E(x)$ — S14

INCREMENT $N_r$ AND $N_s$ BY 1 — S15

IS END CONDITION SATISFIED? — S16

NO

YES

END

# FIG. 6

START

SET TEMPERATURES T AND T' THAT ARE EXCHANGE CANDIDATES — S20

TRANSMIT T AND T' — S21

RECEIVE $N_f(x;\beta)$, $N_f(x;\beta')$, $E(x)$, $N_f(x';\beta')$, $N_f(x';\beta)$, AND $E(x')$ — S22

CALCULATE EXCHANGE PROBABILITY — S23

S24

ARE TEMPERATURES TO BE EXCHANGED? — NO

YES

TRANSMIT UPDATE TEMPERATURE — S25

END

# FIG. 7

INFORMATION PROCESSING DEVICE    40

CPU    41

IMAGE SIGNAL PROCESSING UNIT    44    44a

RAM    42

INPUT SIGNAL PROCESSING UNIT    45    45a

HDD    43

MEDIUM READER    46    46a

COMMUNICATION INTERFACE    47    NETWORK    47a

BUS

Europäisches
Patentamt

European
Patent Office

Office européen
des brevets

# EUROPEAN SEARCH REPORT

Application Number

EP 21 15 3205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DABIRI KEIVAN ET AL: "Replica Exchange MCMC Hardware With Automatic Temperature Selection and Parallel Trial", IEEE TRANSACTIONS ON PARALLEL AND DISTRIBUTED SYSTEMS, IEEE SERVICE CENTER, LOS ALAMITOS, CA, US, vol. 31, no. 7, 5 March 2020 (2020-03-05), pages 1681-1692, XP011776259, ISSN: 1045-9219, DOI: 10.1109/TPDS.2020.2972359 [retrieved on 2020-03-04] * page 1681 - page 1691, left-hand column, paragraph 1 * | 1-6 | INV. G06N7/00 |
| A | YAOHANG LI ET AL: "Decentralized Replica Exchange Parallel Tempering: An Efficient Implementation of Parallel Tempering Using MPI and SPRNG", 26 August 2007 (2007-08-26), COMPUTATIONAL SCIENCE AND ITS APPLICATIONS - ICCSA 2007; [LECTURE NOTES IN COMPUTER SCIENCE], SPRINGER BERLIN HEIDELBERG, BERLIN, HEIDELBERG, PAGE(S) 507 - 519, XP019068493, ISBN: 978-3-540-74482-5 * the whole document * | 1-6 | |
| A,D | JP 2019 071119 A (FUJITSU LTD) 9 May 2019 (2019-05-09) * the whole document * | 1-6 | TECHNICAL FIELDS SEARCHED (IPC) G06N |
| X,P | EP 3 722 941 A1 (FUJITSU LTD [JP]) 14 October 2020 (2020-10-14) * the whole document * | 1-6 | |

The present search report has been drawn up for all claims

| Place of search | Date of completion of the search | Examiner |
|---|---|---|
| The Hague | 8 July 2021 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 3205

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2021

| Patent document cited in search report | | Publication date | Patent family member(s) | | Publication date |
|---|---|---|---|---|---|
| JP 2019071119 | A | 09-05-2019 | NONE | | |
| EP 3722941 | A1 | 14-10-2020 | CN | 111812972 A | 23-10-2020 |
| | | | EP | 3722941 A1 | 14-10-2020 |
| | | | JP | 2020173661 A | 22-10-2020 |
| | | | US | 2020326673 A1 | 15-10-2020 |

EPO FORM P0459

For more details about this annex : see Official Journal of the European Patent Office, No. 12/82

**REFERENCES CITED IN THE DESCRIPTION**

**Patent documents cited in the description**

- JP 2019071119 A

**Non-patent literature cited in the description**

- **JEFFREY S. ROSENTHAL et al.** Jump Markov Chains and Rejection-Free Metropolis Algorithms. *arXiv: 1910.13316v2 [math.ST,* 04 November 2019, https://arxiv.org/pdf/1910.13316.pdf